# EUROPÄISCHE PATENTSCHRIFT

(11) **EP 3 340 763 B1**
(45) Veröffentlichungstag und Bekanntmachung des Hinweises auf die Patenterteilung: **15.04.2020**
(21) Anmeldenummer: 16754273.7
(22) Anmeldetag: 18.08.2016
(51) Int. Cl.: A01C 7/04

(54) **DOSIERVORRICHTUNG FÜR GRANULARES MATERIAL MIT VORDOSIEREINHEIT**
METERING DEVICE FOR GRANULAR MATERIAL WITH A PRE-METERING UNIT
DISPOSITIF DE DOSAGE DE MATIÈRE GRANULAIRE AVEC UNE UNITÉ DE PRÉ-DOSAGE

(30) Priorität: 26.08.2015 DE 102015114155
(43) Veröffentlichungstag der Anmeldung: 04.07.2018
(73) Patentinhaber: Amazonen-Werke H. Dreyer GmbH & Co. KG, 49205 Hasbergen (DE)
(72) Erfinder: TECKEMEYER, Stephan, 49504 Lotte (DE)
(86) Internationale Anmeldenummer: PCT/EP2016/069624
(87) Internationale Veröffentlichungsnummer: WO 2017/032690

(56) Entgegenhaltungen:
- EP-A1- 2 550 850
- NL-A- 6 607 258
- NL-A- 7 314 578
- US-A- 4 324 347

## Beschreibung

Die Erfindung betrifft eine Dosiervorrichtung für granulares Material, insbesondere für Saatgut.

Derartige Vorrichtungen finden in landwirtschaftlichen Sämaschinen Anwendung, um Saatgut in definierten Mengen an Abgabeelemente weiterzuleiten und dann auf einer landwirtschaftlichen Fläche abzulegen. Für bestimmtes Saatgut, beispielsweise Mais, ist es wünschenswert, einzelne Körner in vorherbestimmten Abständen abzulegen. Um das Saatgut zu vereinzeln, verwenden bekannte Dosiervorrichtungen eine mit einer Druckdifferenz beaufschlagbare Vereinzelungstrommel oder Vereinzelungsscheibe. Die Vereinzelungstrommel oder Vereinzelungsscheibe umfasst in Perforationsreihen angeordnete Perforationen, an denen sich das Saatgut anlagern kann, wodurch es zu einer Vereinzelung kommt.

Diese Vereinzelungstechnik ist jedoch nicht zufriedenstellend für Getreide, wie etwa Weizen, Roggen, Gerste, Hafer oder Raps anwendbar. Eine speziell auf einen derartigen Einsatz gerichtete Dosiervorrichtung ist daher aus der DE 10 2012 105 048 A1 bekannt geworden. Diese Dosiervorrichtung umfasst eine in einem Gehäuse konzentrisch rotierende Fördereinrichtung, die annähernd tangential an eine Innenmantelfläche des Gehäuses anschließt. In der Fördereinrichtung sind Taschen gebildet, in denen Körner des Saatguts gedrängt und kreisförmig befördert werden, bis in einem weiteren Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Eine ähnliche Dosiervorrichtung ist aus der NL6607258 bekannt. Aus der EP 2 550 850 ist eine weitere Dosiervorrichtung mit den Merkmalen des Oberbegriffs des Anspruchs 1 bekannt.

Bei diesen Dosiervorrichtungen werden üblicherweise ein Zentraldosierer und ein damit verbundener Verteilerkopf verwendet, um das Saatgut der Fördereinrichtung zuzuführen. Das Saatgut wird dabei vom Verteilerkopf aus mit einer Luftströmung tangential in das Gehäuse der Dosiervorrichtung eingebracht. Die bereits mit einer gewissen Geschwindigkeit geförderten Körner treffen dort auf die schnell rotierende Fördereinrichtung, was zu Beschädigungen der Körner des granularen Materials führen kann.

Aufgabe der Erfindung ist es daher, eine Dosierungsvorrichtung für granulares Material, insbesondere Saatgut, bereitzustellen, welche eine schonendere Behandlung des granularen Materials ermöglicht.

Diese Aufgabe wird durch eine Dosiervorrichtung gemäß Patentanspruch 1 gelöst. Weitere vorteilhafte Ausgestaltungen der Erfindung sind in den abhängigen Ansprüchen angegeben.

Gemäß der Erfindung ist es also vorgesehen, dass die Dosiervorrichtung eine Vordosiereinheit umfasst, mit der granulares Material von einem Reservoir an die Fördereinrichtung gefördert werden kann, wobei mit der Vordosiereinheit granulares Material in Rotation versetzt und in Richtung der Drehachse der Fördereinrichtung bewegt werden kann. Dadurch, dass das granulare Material durch die Vordosiereinheit bereits in Rotation versetzt wird, ist eine schonendere Behandlung des granularen Materials möglich. Insbesondere kann dadurch die Relativgeschwindigkeit zwischen der Fördereinrichtung und dem granularen Material bei dessen Aufgabe minimiert werden. Dadurch können Beschädigungen des granularen Materials weiter verhindert oder wenigstens minimiert werden.

Dadurch, dass das granulare Material auch in Richtung der Drehachse der Fördereinrichtung bewegt wird, kann über die Vordosiereinheit eine im Wesentlichen axiale Zuführung des granularen Materials an die Fördereinrichtung erreicht werden. Dadurch ist wiederum eine kompaktere Anordnung der Vordosiereinheit möglich.

Unter einer Bewegung in Richtung der Drehachse der Fördereinrichtung kann jede Bewegung verstanden werden, die wenigstens eine Bewegungskomponente aufweist, die parallel zur Drehachse der Fördereinrichtung verläuft. Das granulare Material kann mit Hilfe der Vordosiereinheit in Richtung der Drehachse der Fördereinrichtung und zur Fördereinrichtung hin bewegt werden.

Bei dem granularen Material kann es sich insbesondere um Saatgut handeln, alternativ oder zusätzlich jedoch auch um granulares Düngemittel oder granulares Pestizid. Das Saatgut kann insbesondere Saatgut für Getreide, wie etwa Weizen, Roggen, Gerste, Hafer oder Raps, sein.

Durch die Vordosiereinheit kann bereits eine gewisse Vordosierung erzielt werden. Mit anderen Worten kann die Vordosiereinheit so ausgebildet sein, dass eine definierte Menge des granularen Materials pro Zeiteinheit in das Gehäuse der Dosiervorrichtung einbringbar ist. Die definierte Menge kann insbesondere dahingehend definiert sein, dass sie innerhalb eines vorherbestimmten Anzahlbereichs oder Volumensbereichs liegt. Die Vordosiereinheit kann also als volumetrische Vordosiereinheit ausgebildet sein.

Als Reservoir kann hierin insbesondere ein Element verstanden werden, in dem granulares Material angeordnet und der Vordosiereinheit derart bereitgestellt werden kann, dass diese das granulare Material aus dem Reservoir an die Fördereinrichtung fördern kann. In dem Reservoir kann also ein Puffer von granularem Material angeordnet werden. Das Reservoir kann insbesondere einem Sammelbehälter entsprechen, mit welchem das Gehäuse der Dosiervorrichtung, insbesondere über die Vordosiereinheit, verbunden ist.

Das Reservoir kann über ein Nachfüllsystem, insbesondere ein Nursingsystem, mit granularem Material befüllbar sein. Als Nursingsystem kann ein Nachfüllsystem bezeichnet werden, welches einen zentralen Vorratsbehälter zum Vorhalten des granularen Materials umfasst, der über einen pneumatischen Förderkanal direkt oder unmittelbar mit der Dosiervorrichtung, insbesondere dem oben genannten Reservoir, verbunden ist. Bei einem Nursingsystem wird also kein Verteilerkopf verwendet. Auch der in Zusammenhang mit dem Verteilerkopf eingesetzte Zentraldosierer kann bei einem Nursingsystem eingespart werden.

Die Vordosiereinheit weist erfindungsgemäß eine drehbar gelagerte Scheibe auf, die am Ende eines Rohrabschnittes angeordnet ist, dessen Innendurchmesser zur Scheibe hin zunimmt, wobei an der dem Rohrabschnitt zugewandten Seite der Scheibe ein oder mehrere Mitnehmer angeordnet sind. Der Rohrabschnitt kann insbesondere Teil der Vordosiereinheit sein. Durch die Mitnehmer können insbesondere ruhende Körner aus dem Reservoir in eine Drehbewegung versetzt werden.

Der eine oder die mehreren Mitnehmer können mit der Scheibe verbunden sein, insbesondere nicht zerstörungsfrei lösbar. Beispielsweise können der eine oder die mehreren Mitnehmer als Erhebungen an der Scheibe ausgebildet sein. Es ist jedoch auch denkbar, die Mitnehmer an einem separaten Element anzuordnen, welches nicht unmittelbar mit der Scheibe verbunden ist, aber an der dem Rohrabschnitt zugewandten Seite der Scheibe angeordnet ist.

Nicht erfindungsgemäß könnte anstelle einer Scheibe auch ein anderer geometrischer Körper verwendet werden, der das Ende des Rohrabschnittes abschließt und den Rohrabschnitt somit begrenzt, beispielsweise ein Kreiszylinder oder ein Konus.

Der sich erweiternde Rohrabschnitt kann insbesondere mit dem Reservoir verbunden sein. Der Rohrabschnitt kann insbesondere unmittelbar oder direkt an das Reservoir angrenzen oder anschließen. Der Rohrabschnitt kann bezüglich des Reservoirs so angeordnet sein, dass im Betrieb der Dosiervorrichtung granulares Material unter Schwerkraftwirkung aus dem Reservoir in den Rohrabschnitt gelangt. Das Reservoir kann im Betrieb der Vorrichtung also wenigstens teilweise höher als der Rohabschnitt angeordnet sein. Dadurch kann auf ein separates Förderelement verzichtet werden, welches granulares Material aus dem Reservoir in die Vordosiereinheit, insbesondere in den Rohrabschnitt, verbringt. Es ist aber auch möglich, den Rohrabschnitt bezüglich des Reservoirs anders anzuordnen und eine Fördereinrichtung vorzusehen, um granulares Material aus dem Reservoir in die Vordosiereinheit, insbesondere in den Rohrabschnitt, zu fördern. Der Rohrabschnitt kann sich insbesondere zur Scheibe hin konisch erweitern. Der Rohrabschnitt kann bezüglich einer Längs- oder Symmetrieachse rotationssymmetrisch ausgebildet sein. Dadurch ist eine besonders gleichmäßige Zuführung von granularem Material an die drehbar gelagerte Scheibe möglich. Die Längs- oder Symmetrieachse des sich erweiternden Rohrabschnittes kann insbesondere koaxial oder parallel zur Drehachse der Fördereinrichtung und/oder der Scheibe verlaufen.

Durch den einen oder die mehreren oben genannten Mitnehmer können zunächst ruhende Körner des granularen Materials in Rotation versetzt werden. Aufgrund der Fliehkraft bewegen sich diese dann radial nach außen, bis sie an die Wandung des sich erweiternden Rohrabschnittes treffen. Dadurch, dass dessen Innendurchmesser zur Scheibe hin zunimmt, können die sich der Wandung entlang bewegenden Körner dann eine Bewegungskomponente in Richtung der Längs- oder Symmetrieachse bekommen und somit in Richtung der Drehachse der Fördereinrichtung.

Die Scheibe kann wenigstens eine Öffnung oder Aussparung umfassen, über die der Rohrabschnitt mit einer Vordosierkammer verbunden ist, in der wenigstens ein drehbarer Mitnehmer angeordnet ist. Bei der Öffnung kann es sich um eine Durchgangsöffnung in der Scheibe handeln. Eine Aussparung kann insbesondere eine Aussparung am Rand der Scheibe sein, so dass sich ein Durchlass zwischen dem Inneren des Rohrabschnitts und der Vordosierkammer ergibt, wobei der Durchlass durch die in der Scheibe angeordnete Aussparung sowie durch Teile der Wandung des Rohrabschnitts gebildet wird.

Die Vordosierkammer kann insbesondere an die Seite der Scheibe angrenzend angeordnet sein, die vom sich erweiternden Rohrabschnitt abgewandt ist.

Der wenigstens eine drehbare Mitnehmer, der in der Vordosierungskammer angeordnet ist, kann um dieselbe Drehachse drehbar sein wie die Scheibe der Vordosiereinheit. Insbesondere kann der wenigstens eine Mitnehmer auch durch denselben Antrieb angetrieben werden wie die Scheibe. Durch den wenigstens einen drehbaren Mitnehmer können Körner, welche über die Öffnungen oder Aussparungen in die Vordosierkammer gelangen weiter beschleunigt werden.

Der wenigstens eine drehbare Mitnehmer, der in der Vordosierungskammer angeordnet ist, kann aus einem flexiblen Material bestehen oder ein solches umfassen, insbesondere ein Elastomer, beispielsweise einen vulkanisierten Kautschuk. Dadurch kann eine schonendere Behandlung des granularen Materials in der Vordosierungskammer erzielt werden.

Die Vordosierkammer kann radial durch eine Wandung begrenzt sein, die eine Öffnung aufweist, über die die Vordosierkammer mit einer äußeren Kammer verbunden ist, welche die Vordosierkammer umgibt. Dadurch, dass die Körner des granularen Materials in der Vordosierkammer über den wenigstens einen Mitnehmer beschleunigt werden können, kann sich deren Rotationsgeschwindigkeit derart erhöhen, dass sie sich aufgrund der Fliehkraft radial nach außen bewegen und auf die die Vordosierkammer radial begrenzende Wandung stoßen. Sobald die Körner den Bereich der Öffnung passieren, können die Körner wiederum aufgrund von Fliehkraft die Vordosierkammer verlassen und in die äußere Kammer gelangen.

Die äußere Kammer kann die Vordosierkammer insbesondere radial umgeben. In der äußeren Kammer kann wenigstens ein weiterer drehbarer Mitnehmer angeordnet sein. Alternativ kann in der äußeren Kammer aber auch bereits die Fördereinrichtung der Dosiervorrichtung angeordnet sein. In der äußeren Kammer kann also bereits die Dosierung stattfinden. Alternativ kann die äußere Kammer zwischen der Vordosierkammer und der Fördereinrichtung angeordnet sein. In diesem Fall kann auch die äußere Kammer radial durch eine Wandung begrenzt sein, die eine Öffnung aufweist. Durch einen in der äußeren Kammer rotierenden Mitnehmer können Körner des granularen Materials dann analog der Förderung von der Vordosierkammer in die Außenkammer von der Außenkammer in den Gehäusebereich der Fördereinrichtung bewegt werden.

Auch der wenigstens eine drehbare Mitnehmer, der in der äußeren Kammer angeordnet ist, kann aus einem flexiblen Material bestehen oder ein solches umfassen, insbesondere ein Elastomer, beispielsweise einen vulkanisierten Kautschuk. Dadurch kann eine schonendere Behandlung des granularen Materials in der äußeren Kammer erzielt werden.

Die Scheibe kann durch einen Motor oder Antrieb antreibar, insbesondere in Rotation versetzbar, sein.

Die Fördereinrichtung und die Scheibe der Vordosiereinheit können insbesondere durch einen gemeinsamen Antrieb antreibbar sein. Dadurch ist ein einfacher Aufbau möglich.

Die Fördereinrichtung und die Scheibe der Vordosiereinheit können insbesondere koaxial angeordnet sein. Dadurch ist eine weitere Vereinfachung des Aufbaus möglich. Die Scheibe und die Fördereinrichtung können also eine gemeinsame Drehachse aufweisen. Entlang derer kann eine Antriebswelle des gemeinsamen Antriebs verlaufen, mit der die Fördereinrichtung und/oder die Scheibe unmittelbar verbunden ist. Auf ein Getriebe kann also für den Antrieb der Scheibe und/oder der Fördereinrichtung verzichtet werden.

Die Drehachse der Fördereinrichtung und die Drehachse der Scheibe der Vordosiereinheit können auch einen Winkel zueinander einschließen, der kleiner als 10°, insbesondere kleiner als 5° ist.

Auch der wenigstens eine Mitnehmer der Vordosierkammer und der gegebenenfalls vorhandene wenigstens eine Mitnehmer der äußeren Kammer können durch den gemeinsamen Antrieb antreibbar sein. Auch diese Mitnehmer können um eine Drehachse drehbar sein, welche mit der Drehachse der Scheibe und der Fördereinrichtung übereinstimmt.

Die Scheibe sowie der wenigstens eine Mitnehmer der Vordosierkammer und/oder der äußeren Kammer können insbesondere starr mit der Fördereinrichtung verbunden sein. Dadurch kann auf besonders einfache Weise eine Rotationsbewegung der Förderereinrichtung auf die Scheibe bzw. die Mitnehmer übertragen werden. Die Scheibe der Vordosiereinheit kann dafür einstückig mit der Fördereinrichtung ausgebildet sein oder mit der Fördereinrichtung zerstörungsfrei lösbar oder nicht zerstörungsfrei lösbar verbunden sein.

An einer Innenfläche des Rohrabschnittes, dessen Innendurchmesser zur Scheibe hin zunimmt, kann ein Störelement in Form einer Erhebung angeordnet sein. Durch ein solches Störelement können Blockaden der Öffnungen oder Aussparungen der Scheibe aufgelöst werden, da sich die durch die Mitnehmer der Scheibe in Rotation versetzten Körner im Bereich des Störelements neu ordnen müssen und dadurch gewissermaßen aufgewirbelt werden.

Das Störelement kann insbesondere keilförmig ausgebildet sein. Dadurch ist es möglich, auf Körner des granularen Materials eine Kraft in radialer Richtung auszuüben und damit eine Neuorientierung der Körner zu bewirken.

Das Störelement kann insbesondere so angeordnet sein, dass es wenigstens während eines Teils der Rotationsbewegung der Scheibe direkt oder unmittelbar an die Öffnung oder Aussparung der Scheibe angrenzt.

Die Dosiervorrichtung kann eine Vereinzelungsvorrichtung sein. Mit anderen Worten kann die Dosiervorrichtung das granulare Material vereinzeln.

Die Dosiervorrichtung, insbesondere die Fördereinrichtung, kann einen Zentrierschieber umfassen, der granulares Material entlang einer Führungsfläche eines Führungselements vom Aufnahmebereich in den Abgabebereich schiebt und dabei ein Korn zentriert, indem er es beidseitig abstützt oder führt. Nicht zentrierte Körner, die im Aufnahmebereich aufgenommen und entlang der Führungsfläche transportiert werden, können infolge ausgesondert werden, sodass im Abgabebereich das zentrierte Korn verbleibt und an ein Abgabeelement zur Ablage auf einer landwirtschaftlichen Fläche weitergeleitet werden kann. Insbesondere kann genau ein Korn durch den Zentrierschieber zentriert geführt werden. In diesem Fall entspricht die Dosiervorrichtung also einer Vereinzelungsvorrichtung.

Die Angabe "beidseitig abstützt oder führt" bedeutet, dass der Zentrierschieber Elemente umfasst, welche das zentrierte Korn an beiden Seiten (auf die Drehrichtung des Zentrierschiebers bezogen) abstützen oder führen. Damit kann eine Bewegung des Korns quer zur Drehrichtung reduziert oder vermieden werden, sodass das zentrierte Korn im Wesentlichen entlang einer vorbestimmten Bewegungsbahn vom Aufnahmebereich in den Abgabebereich geschoben wird. Um das Korn seitlich zu führen ist es nicht erforderlich, dass der Zentrierschieber stets in direktem Kontakt mit dem Korn steht. Es ist ausreichend, wenn der Zentrierschieber verhindert, dass das Korn einen vorherbestimmten seitlich begrenzten Bereich verlässt.

Als Drehrichtung wird die Bewegungsrichtung bezeichnet, in der sich der Zentrierschieber im Betrieb der Dosiervorrichtung bewegt. Mit anderen Worten bezeichnet die Drehrichtung die Richtung der Vorwärtsbewegung des Zentrierschiebers. Wenn sich der Zentrierschieber entlang einer Kreisbahn bewegt, ist die Bewegungsrichtung an jedem Punkt der Kreisbahn tangential zu dieser. Die Angaben "seitlich" oder "beidseitig" beziehen sich daher auf die Bereiche quer zur Drehrichtung.

Die Angabe "wenigstens teilweise" bedeutet in diesem Zusammenhang, dass der Zentrierschieber das Korn nicht durchgehend vom Aufnahmebereich bis zum Abgabebereich beidseitig abstützen oder führen muss. Beispielsweise kann es Zeit in Anspruch nehmen, bis sich das Korn so relativ zum Zentrierschieber ausgerichtet hat, dass eine beidseitige Abstützung oder Führung möglich ist. Während dieser Zeit kann das Korn bereits einen gewissen Weg vom Aufnahmebereich zum Abgabebereich bewegt werden. Das Korn kann aber auch entlang des gesamten Wegs beidseitig abgestützt oder geführt werden.

Der Zentrierschieber kann auch ein oder mehrere Elemente umfassen, welche das zentrierte Korn in Drehrichtung gesehen nach hinten abstützen. Die Elemente, welche die seitliche Abstützung oder Führung bewirken können zugleich auch die Abstützung nach hinten gewährleisten.

Der Zentrierschieber kann so drehbar in dem Gehäuse gelagert sein, dass er entlang einer Kreisbahn bewegbar ist, wobei das Führungselement wenigstens teilweise entlang der Kreisbahn verläuft, und wobei die Breite der Führungsfläche vom Aufnahmebereich zum Abgabebereich hin abnimmt.

Durch die abnehmende Breite der Führungsfläche können die Körner, welche nicht durch den Zentrierschieber zentriert werden, im Laufe der Bewegung vom Aufnahmebereich in den Abgabebereich aufgrund der wegfallenden Stütze durch die Führungsfläche unter Zentrifugalkrafteinflüssen und/oder Schwerkrafteinflüssen ausgesondert werden. Diese können zur erneuten Förderung in den Aufnahmebereich zurückgeführt werden, insbesondere durch Trägheit und/oder unter Schwerkrafteinfluss. Auch die Breite des Führungselements insgesamt kann vom Aufnahmebereich zum Abgabebereich hin abnehmen.

Der Zentrierschieber kann so im Gehäuse gelagert sein, dass die Kreisbahn im Betrieb der Dosiervorrichtung im Wesentlichen vertikal verläuft. Mit anderen Worten kann die Drehachse, um die der Zentrierschieber rotiert, horizontal verlaufen, insbesondere im Betrieb parallel zum zu bearbeitenden Boden. Insbesondere kann die Drehachse mit der Horizontalen einen Winkel zwischen 0° und 10°, insbesondere zwischen 0° und 5°, einschließen.

Das Führungselement kann insbesondere radial außerhalb der Kreisbahn verlaufen. Mit anderen Worten kann das Führungselement die Kreisbahn wenigstens teilweise radial umgeben oder begrenzen. Das Führungselement kann insbesondere annähernd tangential entlang bestimmten Abschnitten der Kreisbahn verlaufen, insbesondere im Abschnitt der Kreisbahn zwischen dem Aufnahmebereich und dem Abgabebereich.

Die Kreisbahn kann insbesondere durch ein äußerstes Ende oder eine Spitze des Zentrierschiebers überstrichen werden. Mit anderen Worten kann die Kreisbahn einen Radius aufweisen, der der Länge des Zentrierschiebers entspricht. Die Länge des Zentrierschiebers kann der maximalen radialen Erstreckung des Zentrierschiebers ausgehend von der Drehachse entsprechen.

Der Aufnahmebereich kann ein bestimmtes Kreissegment der Kreisbahn des Zentrierschiebers umfassen.

Im Abgabebereich kann die Stützwirkung des Führungselementes entfallen oder der Verlauf des Führungselementes sich derart ändern, dass das wenigstens eine Korn durch Fliehkraft in die Auslassöffnung gefördert wird.

Als Führungsfläche des Führungselements wird hierin die für die Förderung des granularen Materials vom Aufnahmebereich in den Abgabebereich wirksame Fläche des Führungselements bezeichnet. Mit anderen Worten entspricht die Führungsfläche des Führungselements der Oberfläche des Führungselements, auf der Körner des granularen Materials bei der Förderung von dem Aufnahmebereich in den Abgabebereich hin bewegt werden. Aufgrund der Bewegung entlang der Kreisbahn wird das granulare Material durch Fliehkraft gegen die Führungsfläche des Führungselements gedrückt. Die Führungsfläche des Führungselements dient daher als Stütze für das granulare Material entgegen der Fliehkraft. Alternativ oder zusätzlich können die Körner auch durch die Schwerkraft gegen die Führungsfläche gedrückt werden. Dies kann insbesondere dann der Fall sein, wenn sich der Zentrierschieber gemäß einer Alternative nicht entlang einer Kreisbahn um die Drehachse bewegt, sondern entlang einer Bahn, die wenigstens teilweise parallel zur Horizontalen verläuft.

Wenn die Breite der Führungsfläche abnimmt geht diese Stützwirkung, wie oben erwähnt, für bestimmte Körner des granularen Materials verloren, weshalb diese nicht weiter zum Abgabebereich hin gefördert werden können, sondern ausgesondert werden.

Die Breite der Führungsfläche kann vom Aufnahmebereich zum Abgabebereich hin kontinuierlich abnehmen. Dadurch können überschüssige Körner sukzessive ausgesondert werden. Diese werden dann sukzessive an den Aufnahmebereich zurückgeführt, sodass ein ausreichendes Reservoir von granularem Material im Aufnahmebereich bereitgestellt werden kann, selbst wenn über die Zufuhrleitung temporär zu wenig granulares Material zugeführt wird. Die Breite der Führungsfläche kann jedoch auch diskontinuierlich abnehmen.

Als Breite der Führungsfläche kann insbesondere die Ausdehnung der Führungsfläche quer zur Kreisbahn bezeichnet werden. Die Richtung quer zur Kreisbahn bezeichnet hierin eine Richtung, die an jedem Punkt der Kreisbahn senkrecht zur Tangente und senkrecht zum Radius der Kreisbahn verläuft. Die Ausdehnung der Führungsfläche in dieser Richtung wird entlang der, gegebenenfalls konturierten, Führungsfläche bestimmt.

Das Führungselement kann eine Vertiefung aufweisen, in die der Zentrierschieber wenigstens teilweise eingreift, wobei die Tiefe der Vertiefung entlang der Kreisbahn des Vereinzelungsschiebers vom Aufnahmebereich zum Abgabebereich hin abnimmt. Durch die Vertiefung im Aufnahmebereich ist es möglich, dass zuverlässig Saatgut durch den Zentrierschieber aufgenommen und entlang der Führungsfläche bewegt werden kann. Durch die abnehmende Tiefe der Vertiefung entlang der Kreisbahn kann wiederum eine Aussonderung überschüssiger Körner des granularen Materials bewirkt werden. Die Abnahme der Tiefe geht mit einer Abnahme der Breite der Führungsfläche einher.

Die Vertiefung im Führungselement kann insbesondere einer Nut oder Kerbe entsprechen. Die Nut oder Kerbe kann insbesondere V-förmig ausgebildet sein.

Das Führungselement kann im Abgabebereich einen in Drehrichtung verlaufenden Grat aufweisen. Durch einen solchen Grat wird eine Vereinzelung des granularen Materials weiter gefördert, da entlang des Grats üblicherweise nur ein Korn stabil bewegt werden kann, nämlich das Korn, welches wenigstens teilweise durch den Zentrierschieber zentriert wird. Die vorherbestimmte Bahn entlang der Führungsfläche, entlang der der Zentrierschieber ein Korn zentriert bewegt, kann insbesondere entlang des Grats verlaufen.

Beidseitig des Führungselements kann ein Sammelraum für im Laufe des Transports vom Aufnahmebereich zum Abgabebereich ausgesonderte Körner des granularen Materials angeordnet sein, der mit dem Aufnahmebereich verbunden ist. Dadurch können ausgesonderte Körner wieder für den erneuten Transport vom Aufnahmebereich in den Abgabebereich bereitgestellt werden. Der Sammelraum kann durch die Wandung des Gehäuses begrenzt werden.

Das Führungselement kann an einer Innenfläche des Gehäuses angeordnet sein, welche den Raum, in dem der Zentrierschieber im Betrieb rotiert, radial begrenzt. Mit anderen Worten kann das Gehäuse im Wesentlichen zylindrisch ausgebildet sein, wobei das Führungselement an der Mantelfläche des Gehäuses angeordnet ist.

Das Führungselement kann Teil der Innenfläche des Gehäuses sein. Alternativ kann das Führungselement zerstörungsfrei lösbar oder nicht zerstörungsfrei lösbar mit der Innenfläche des Gehäuses verbunden sein. Beispielsweise kann das Führungselement an das Gehäuse angeschweißt sein.

Das Führungselement und der Zentrierschieber können in einer gemeinsamen Ebene angeordnet sein, wobei das Führungselement und der Zentrierschieber bezüglich dieser Ebene symmetrisch ausgebildet sind. Die gemeinsame Ebene kann insbesondere eine Rotationsebene des Zentrierschiebers sein.

Falls das Führungselement eine Vertiefung aufweist, können die Punkte mit der größten Tiefe in der gemeinsamen Ebene liegen.

Falls das Führungselement einen Grat aufweist, kann dieser ebenfalls in der gemeinsamen Ebene liegen.

Die Dosiervorrichtung kann wenigstens einen weiteren Zentrierschieber umfassen. Dieser kann eines oder mehrere Merkmale des oben genannten Zentrierschiebers aufweisen. Insbesondere kann der wenigstens eine weitere Zentrierschieber so drehbar im Gehäuse gelagert sein, dass er entlang der Kreisbahn bewegbar ist. Mit anderen Worten kann der weitere Zentrierschieber in Umfangsrichtung versetzt zum oben beschriebenen Zentrierschieber angeordnet sein und dem oben beschriebenen Zentrierschieber nachlaufend entlang der Kreisbahn bewegbar sein.

Der Zentrierschieber und der wenigstens eine weitere Zentrierschieber können miteinander verbunden sein, insbesondere starr miteinander verbunden sein.

Der Zentrierschieber und der wenigstens eine weitere Zentrierschieber können an einer gemeinsamen rotierenden Scheibe oder einem gemeinsam rotierenden Ring angeordnet sein.

Der Zentrierschieber und der wenigstens eine weitere Zentrierschieber können ein die Zentrierwirkung des Zentrierschiebers erzeugendes Element aufweisen. Dieses Element kann insbesondere so ausgebildet sein, dass ein Korn des granularen Materials beidseitig stützbar oder führbar ist. Das Element kann nach vorne hin (in Drehrichtung) offen sein. Mit anderen Worten kann eine Abstützung des Korns nach vorne hin unterbleiben.

Der Zentrierschieber kann insbesondere eine in Drehrichtung offene Nut oder Kerbe zur Aufnahme eines Korn des granularen Materials umfassen. Die Nut oder Kerbe kann auch in Richtung der Führungsfläche offen sein. Die Größe der Nut kann so gewählt sein, dass sich maximal ein Korn ganz oder teilweise in der Nut anordnen kann.

Die Nut kann insbesondere konisch oder V-förmig ausgebildet sein. Die Nut kann insbesondere bezüglich der oben genannten gemeinsamen Ebene des Führungselements und des Zentrierschiebers symmetrisch ausgebildet sein. Eine korrespondierende Vertiefung im Führungselement kann ebenfalls symmetrisch bezüglich dieser Ebene ausgebildet sein. Diese Symmetrie erlaubt insbesondere ein beidseitiges Absondern von überschüssigen Körnern in den umgebenden Sammelraum.

In einer alternativen Ausführungsform kann der Zentrierschieber mehrere in Richtung des Führungselements weisende Borsten aufweisen. Wenn die Breite der Führungsfläche zum Abgabebereich hin abnimmt, werden äußere Borsten nicht mehr entlang der Führungsfläche bewegt und können sich infolge der Fliehkraftwirkung aufstellen. Damit können diese Borsten ein Korn des granularen Materials seitlich führen. Nachlaufende Borsten können das Korn in Drehrichtung gesehen nach hinten abstützen. Mit anderen Worten kann sich auch bei einem Borsten umfassenden Zentrierschieber eine konische oder V-förmige Zentrierfläche für ein Korn ausbilden.

Das die Zentrierwirkung des Zentrierschiebers erzeugende Element des Zentrierschiebers kann insbesondere am äußersten Ende oder an der Spitze des Zentrierschiebers angeordnet sein.

Das Zentrierelement kann austauschbar sein. Beispielsweise kann eine die oben genannte Nut des Zentrierschiebers umfassende Spitze des Zentrierschiebers auswechselbar sein. Dadurch kann eine gewisse Anpassung oder Optimierung hinsichtlich der Korngrößen erzielt werden.

Die Dosiervorrichtung kann wenigstens ein Störelement umfassen, welches so ausgebildet ist, dass Körner des granularen Materials, die nicht durch den Zentrierschieber zentriert werden unter Einfluss des Störelements ihre Lage ändern oder vom Transport zum Abgabebereich hin ausgesondert werden. Ein derartiges Störelement begünstigt die Aussonderung überschüssiger Körner und somit die Vereinzelung des granularen Materials.

Das Störelement kann beispielsweise eine Druckluftdüse umfassen.

Es kann also wenigstens eine Druckluftdüse vorgesehen und so angeordnet sein, dass Druckluft auf granulares Material gerichtet werden kann, welches durch den Zentrierschieber entlang der Führungsfläche des Führungselements geschoben wird. Diese Druckluft kann eine Störung für Körner des granularen Materials darstellen, welche nicht durch den Zentrierschieber zentriert geführt werden. Dadurch kann die Aussonderung von überschüssigen Körnern unterstützt werden. Dies kann auch eine zuverlässigere Vereinzelung des granularen Materials ermöglichen.

Die Druckluftdüse kann in das Führungselement integriert sein, und insbesondere eine Luftausströmöffnung umfassen, die in der Führungsfläche angeordnet ist. Dadurch ist eine besonders effiziente Störung überschüssiger Körner möglich.

Alternativ oder zusätzlich ist es auch denkbar, eine mit Druckluft beaufschlagbare Scheibe vorzusehen, die gemeinsam mit dem Zentrierschieber rotiert und wenigstens eine Öffnung aufweist, die im Bereich des Zentrierschiebers angeordnet ist. Diese mitlaufende Öffnung kann in Drehrichtung gesehen insbesondere stromabwärts des Zentrierschiebers angeordnet sein, also vorlaufen.

Durch die Druckluftdüse kann Druckluft in radialer und/oder axialer Richtung ausgegeben werden.

Das Störelement kann alternativ oder zusätzlich ein geometrisches Störelement sein. Mit anderen Worten kann das wenigstens eine Störelement einer lokalen Änderung der Geometrie der Führungsfläche des Führungselements entsprechen. Insbesondere kann das wenigstens eine Störelement eine veränderte Neigung der Führungsfläche umfassen. Im Bereich des Störelements kann sich die Geometrie der Führungsfläche insbesondere diskontinuierlich ändern.

Alternativ zur beschriebenen Ausbildungsform unter Verwendung von Zentrierschiebern kann die Dosiervorrichtung auch wie in der DE 10 2012 105 048 A1 beschrieben ausgebildet sein. An die drehbar gelagerte Fördereinrichtung kann also annähernd tangential eine Innenmantelfläche des Gehäuses anschließen. Die Fördereinrichtung kann mit Taschen zusammenwirken, in denen Körner des granularen Materials gedrängt und kreisförmig befördert werden, bis in einem vorherbestimmten Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Die Erfindung stellt außerdem eine Sämaschine gemäß Anspruch 9 bereit umfassend eine oben beschriebene Dosiervorrichtung. Bei der Sämaschine kann es sich insbesondere um eine Einzelkornsämaschine handeln. Die Sämaschine kann auch ein oben beschriebenes Nachfüllsystem, insbesondere ein Nursingsystem, umfassen.

Weitere Merkmale und Vorteile der Erfindung werden nachfolgend anhand der beispielhaften Figuren erläutert. Dabei zeigt:
- Figur 1: einen Querschnitt durch Teile einer beispielhaften Dosiervorrichtung;
- Figur 2: eine perspektivische Ansicht von Teilen einer beispielhaften Dosiervorrichtung;
- Figur 3: eine weitere perspektivische Ansicht von Teilen einer beispielhaften Dosiervorrichtung;
- Figur 4: eine weitere perspektivische Ansicht von Teilen einer beispielhaften Dosiervorrichtung; und
- Figur 5: eine weitere perspektivische Ansicht von Teilen einer beispielhaften Dosiervorrichtung.

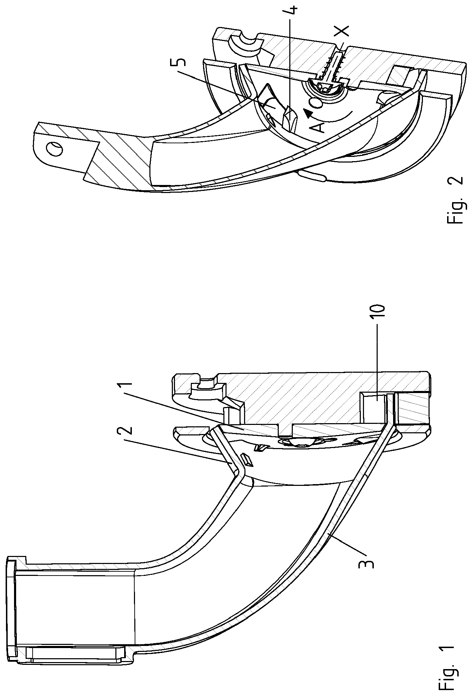

Figur 1 zeigt einen Schnitt durch eine beispielhafte Dosiervorrichtung, insbesondere durch eine Vordosiereinheit einer erfindungsgemäßen Dosiervorrichtung.

In Figur 1 ist eine drehbar gelagerte Scheibe 1 zu erkennen, die am Ende eines Rohrabschnittes 2 angeordnet ist, dessen Innendurchmesser zur Scheibe hin zunimmt. Am der Scheibe gegenüberliegenden Ende des Rohrabschnittes 2 grenzt unmittelbar ein Reservoir 3 an, in welchem granulares Material bereitgestellt werden kann, welches in Figur 1 nicht dargestellt ist. Bei dem granularen Material kann es sich beispielsweise um Saatgut handeln.

In einer Wandung des Reservoirs 3 können hier nicht gezeigte Durchlassöffnungen vorgesehen sein, welche insbesondere ein Nursingsieb bilden.

Körner des granularen Materials können unter Schwerkraftwirkung vom Reservoir 3 in den Rohrabschnitt 2 rutschen, wo sie dann zunächst an der drehbar gelagerten Scheibe 1 anstehen.

Die Dosiervorrichtung kann so ausgebildet sein, dass die Scheibe 1 mit einer Frequenz zwischen 5 und 60 Hz rotiert, was der Frequenz der Fördereinrichtung entsprechen kann.

Ein nicht dargestellter Motor oder Antrieb kann daher vorgesehen sein, um die Scheibe 1 anzutreiben. Eine Antriebswelle des Motors oder Antriebs kann entlang der Drehachse der Scheibe 1 verlaufen. Die Scheibe 1 kann mit der Antriebswelle unmittelbar verbunden sein. Der Motor oder Antrieb kann auch zugleich als Antrieb für die drehbare Fördereinrichtung der Dosiervorrichtung dienen.

Wie in Figur 2 genauer dargestellt wird, ist an der dem Inneren des Rohrabschnitts 2 zugewandten Seite der Scheibe 1 wenigstens ein Mitnehmer 4 angeordnet, der in diesem Beispiel unmittelbar mit der Scheibe 1 verbunden ist und eine Erhebung auf der Scheibe 1 bildet. Durch diesen Mitnehmer 4 können Körner des granularen Materials in Rotation versetzt werden.

Aufgrund der Fliehkraft bewegen sich diese in Rotation versetzten Körner dann hin zur Wandung des Rohrabschnittes 2. Dadurch, dass sich dessen Innendurchmesser zur Scheibe 1 hin aufweitet, erhält das so in eine Rotationsbewegung versetzte Korn auch eine Bewegungskomponente in Richtung der Drehachse der Scheibe 1, also eine axiale Komponente. Da die Drehachse der Scheibe 1 in diesem Beispiel mit der Drehachse einer nicht gezeigten Fördereinrichtung der Dosiervorrichtung übereinstimmt, erhalten die Körner somit auch eine Bewegungskomponente in Richtung der Drehachse der nicht dargestellten Fördereinrichtung.

Die Drehrichtung der Scheibe ist in Figur 2 durch einen Pfeil A angedeutet. Die Drehachse X ist ebenfalls schematisch angedeutet.

In der in Figur 2 gezeigten Scheibe ist eine Aussparung 5 vorgesehen, welche am Rand der Scheibe 1 über einen gewissen Umfangsbereich verläuft. Durch diese Aussparung 5 entsteht zusammen mit Teilen der Wandung des Rohrabschnittes 2 eine Durchlassöffnung zwischen dem Rohrabschnitt 2 und einer Vordosierkammer, welche an die dem Rohrabschnitt 2 abgewandten Seite der Scheibe 1 angrenzt. Durch diese Durchlassöffnung kann jeweils nur eine begrenzte Menge von Körnern des granularen Materials in die Vordosierkammer gelangen, sodass dadurch bereits eine gewisse Vordosierung stattfindet.

Der Mitnehmer 4 ist hier auf die Drehrichtung der Scheibe bezogen vor (stromaufwärts) der Aussparung 5 angeordnet. Insbesondere grenzt der Mitnehmer 4 unmittelbar an die Aussparung 5 an. Abweichende Anordnungen des Mitnehmers sind jedoch ebenso möglich.

Die maximale Ausdehnung der Durchlassöffnung, die durch die Aussparung 5 zusammen mit Teilen der Wandung des Rohrabschnittes 2 entsteht, kann in Umfangsrichtung zwischen 0,5 cm und 1,5 cm, insbesondere zwischen 0,8 cm und 1,2 cm, betragen. Die maximale Ausdehnung der Durchlassöffnung quer dazu, also in radialer Richtung, kann zwischen 0,4 cm und 1,2 cm, insbesondere zwischen 0,6 cm und 1 cm, betragen.

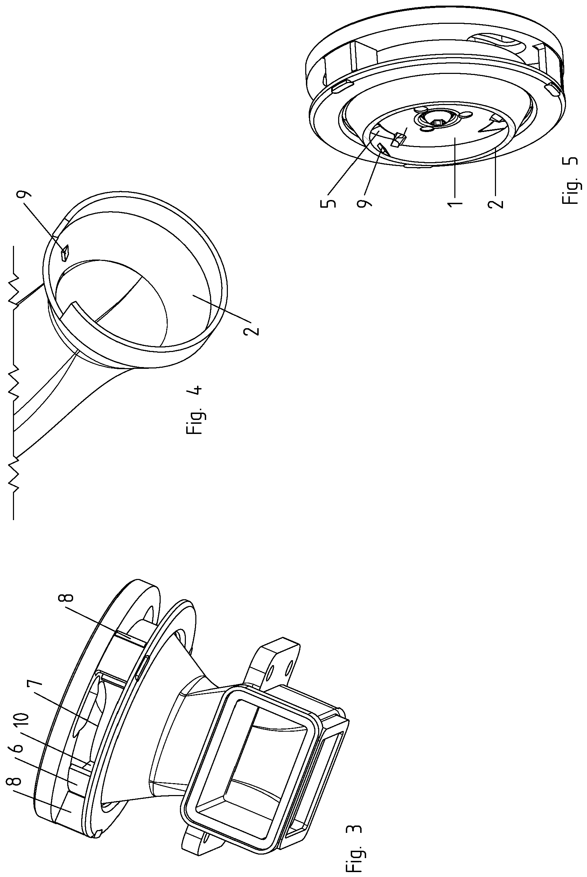

In der Vordosierkammer ist wiederum wenigstens ein drehbarer Mitnehmer 10 (in Figur 1 und Figur 3 zu erkennen) angeordnet, welcher die in die Vordosierkammer eingebrachten Körner weiter in Drehrichtung beschleunigt. Dieser Mitnehmer 10 kann wenigstens abschnittsweise aus einem flexiblen Material, beispielsweise vulkanisiertem Kautschuk (Gummi), bestehen.

Wie Figur 3 zeigt, ist die Vordosierkammer radial durch eine Wandung 6 begrenzt, die jedoch eine Öffnung 7 aufweist, über die die Vordosierkammer mit einer äußeren Kammer verbunden ist, welche die Vordosierkammer umgibt. Da der Illustration wegen Wandungsteile der äußeren Kammer in Figur 3 nicht dargestellt sind, sind in Figur 3 lediglich zwei Mitnehmer 8 zu erkennen, die in der äußeren Kammer drehbar angeordnet sind.

Die in der Vordosierkammer beschleunigten Körner können durch Fliehkraft über die Öffnung 7 in die äußere Kammer gelangen. Auch die äußere Wandung kann wiederum durch eine Wandung radial begrenzt werden, wobei auch diese Wandung eine Öffnung aufweisen kann, welche die äußere Kammer mit dem Inneren des Gehäuses verbindet, in dem die Fördereinrichtung drehbar gelagert ist. Durch weitere Beschleunigung der Körner des granularen Materials über die Mitnehmer 8 in der äußeren Kammer können die Körner des granularen Materials also schließlich durch Fliehkraftwirkung über die Öffnung der Wandung der äußeren Kammer in das Gehäuse der Fördereinrichtung gelangen und dort der Fördereinrichtung zur weiteren Dosierung bereitgestellt werden.

Wenn die Körner des granularen Materials auf die Fördereinrichtung treffen, befinden sich die Körner bereits in einer entsprechenden Rotationsbewegung, sodass die Relativbewegung zwischen der Fördereinrichtung und den Körnern gering ist. Dadurch ist eine schonende Übergabe des granularen Materials an die Fördereinrichtung möglich.

Mit Hilfe der Vordosiereinheit wird das granulare Material also sukzessive in Drehung versetzt, bis es im Wesentlichen die Rotationsgeschwindigkeit der Fördereinrichtung aufweist. Diese Zuführung ist für das granulare Material schonender als eine tangentiale Zuführung.

In den Figuren nicht dargestellt, jedoch auch möglich ist, dass in der äußeren Kammer bereits die Fördereinrichtung selbst angeordnet ist. In diesem Fall wird das granulare Material also über die Vordosierkammer direkt an die Fördereinrichtung übergeben. Dadurch ist ein kompakterer Aufbau möglich.

In den in Figuren 1 bis 3 gezeigten Beispielen verläuft die Längs- oder Symmetrieachse des Rohrabschnitts 2 koaxial zur Drehachse der Scheibe 1. Die Drehachse der Scheibe 1 verläuft außerdem koaxial zur Drehachse der Mitnehmer der Vordosierkammer und der äußeren Kammer sowie der nicht gezeigten Fördereinrichtung. Dadurch ist ein kompakter Aufbau möglich.

Die Scheibe 1 ist außerdem mit dem Rotor der Mitnehmer und der Fördereinrichtung verbunden. Dadurch kann der Aufbau weiter vereinfacht werden.

Im Bereich der in Figur 2 dargestellten Aussparungen 5 in der Scheibe 1 können sich im Betrieb Brücken zwischen den Körnern bilden, sodass eine Blockade der Aussparungen 5 entsteht. Durch solche Blockaden kann die Zuführung von granularem Material in die Vordosierkammer wenigstens temporär unterbunden werden, was im weiteren Verlauf wiederum zu Fehlstellen in der Dosierung durch die Dosiervorrichtung führt, da die Fördereinrichtung wenigstens temporär nicht mit ausreichend Saatgut versorgt wird.

Um eine solche Brückenbildung zu verhindern bzw. schnell auflösen zu können, kann ein in Figur 4 dargestelltes Störelement 9 in Form einer Erhebung an der Innenfläche des Rohrabschnittes 2 angeordnet sein. Wie aus Figur 4 ersichtlich, kann dieses Störelement 9 insbesondere keilförmig ausgebildet sein, so dass damit eine Kraft in radialer Richtung nach innen auf die Körner ausgeübt werden kann. Die blockierenden Körner müssen sich aufgrund des Störelements 9 neu orientieren, wodurch Blockaden verhindert oder wenigstens rasch aufgelöst werden können.

In Figur 5 ist eine mögliche Anordnung des Störelements 9 in Bezug auf die Scheibe 1 gezeigt. Wie man der Figur 5 entnehmen kann, ist das Störelement 9 in einem Bereich des Rohrabschnitts 2 angeordnet, der wenigstens während eines Teils der Drehbewegung der Scheibe 1 unmittelbar an eine Aussparung 5 in der Scheibe 1 angrenzt.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Insbesondere ist die Geometrie und relative Anordnung der einzelnen Teile zueinander nicht auf die gezeigten Ausführungsformen beschränkt.

## Patentansprüche

1. Dosiervorrichtung für granulares Material, insbesondere Saatgut, wobei die Dosiervorrichtung eine in einem Gehäuse drehbar gelagerte Fördereinrichtung umfasst, die mit einer Gehäusewandung oder einem Führungselement so zusammenwirkt, dass granulares Material von einem Aufnahmebereich in einen Abgabebereich förderbar ist,
wobei die Dosiervorrichtung eine Vordosiereinheit umfasst, mit der granulares Material von einem Reservoir (3) an die Fördereinrichtung gefördert werden kann;
wobei mit der Vordosiereinheit granulares Material in Rotation versetzt und in Richtung der Drehachse der Fördereinrichtung bewegt werden kann; und
wobei die Vordosiereinheit eine drehbar gelagerte Scheibe (1) umfasst, **dadurch gekennzeichnet, dass** die Scheibe (1) am Ende eines Rohrabschnittes (2) angeordnet ist, dessen Innendurchmesser zur Scheibe (1) hin zunimmt, und wobei an der dem Rohrabschnitt (2) zugewandten Seite der Scheibe (1) ein oder mehrere Mitnehmer (4) angeordnet sind.

2. Dosiervorrichtung nach Anspruch 1, wobei die Scheibe (1) wenigstens eine Öffnung oder Aussparung (5) umfasst, über die der Rohrabschnitt (2) mit einer Vordosierkammer verbunden ist, in der wenigstens ein drehbarer Mitnehmer (10) angeordnet ist.

3. Dosiervorrichtung nach Anspruch 2, wobei die Vordosierkammer radial durch eine Wandung (6) begrenzt ist, die eine Öffnung (7) aufweist, über die die Vordosierkammer mit einer äußeren Kammer verbunden ist, welche die Vordosierkammer umgibt.

4. Dosiervorrichtung nach einem der vorangegangenen Ansprüche, wobei die Fördereinrichtung und die Scheibe (1) der Vordosiereinheit durch einen gemeinsamen Antrieb antreibbar sind.

5. Dosiervorrichtung nach einem der vorangegangenen Ansprüche, wobei die Fördereinrichtung und die Scheibe (1) der Vordosiereinheit koaxial angeordnet sind.

6. Dosiervorrichtung nach einem der Ansprüche 1 - 5, wobei an einer Innenfläche des Rohrabschnittes (2) ein Störelement (9) in Form einer Erhebung angeordnet ist.

7. Dosiervorrichtung nach Anspruch 6, wobei das Störelement (9) keilförmig ausgebildet ist.

8. Sämaschine umfassend eine Dosiervorrichtung nach einem der vorangegangenen Ansprüche.

## Claims

1. Metering apparatus for granular material, in particular seed, wherein the metering apparatus comprises a conveying device which is rotatably mounted in a housing and which interacts with a housing wall or a guide element in such a way that granular material can be conveyed from a receiving region to a dispensing region,
wherein the metering apparatus comprises a pre-metering unit, by way of which granular material can be conveyed from a reservoir (3) to the conveying device;
wherein the pre-metering unit can be used to set granular material in rotation and move it in the direction of the axis of rotation of the conveying device; and
wherein the pre-metering unit comprises a rotatably mounted disc (1), **characterized in that** the disc (1) is arranged at the end of a tube portion (2), the inner diameter of which increases towards the disc (1), and wherein one or more drivers (4) are arranged at that side of the disc (1) which faces towards the tube portion (2).

2. Metering apparatus according to Claim 1, wherein the disc (1) comprises at least one opening or cutout (5), by way of which the tube portion (2) is connected to a pre-metering chamber in which at least one rotatable driver (10) is arranged.

3. Metering apparatus according to Claim 2, wherein the pre-metering chamber is delimited radially by a wall (6) having an opening (7) which connects the pre-metering chamber to an outer chamber surrounding the pre-metering chamber.

4. Metering apparatus according to one of the preceding claims, wherein the conveying device and the disc (1) of the pre-metering unit can be driven by a common drive.

5. Metering apparatus according to one of the preceding claims, wherein the conveying device and the disc (1) of the pre-metering unit are arranged coaxially.

6. Metering apparatus according to one of Claims 1 - 5, wherein a disruptive element (9) in the form of a raised portion is arranged on an inner surface of the tube portion (2).

7. Metering apparatus according to Claim 6, wherein the disruptive element (9) is of wedge-shaped configuration.

8. Seeding machine comprising a metering apparatus according to one of the preceding claims.

## Revendications

1. Dispositif de dosage de matière granulaire, en particulier de semences, le dispositif de dosage comprenant un dispositif de transport supporté à rotation dans un boîtier, lequel coopère avec une paroi de boîtier ou avec un élément de guidage de telle sorte que la matière granulaire puisse être transportée depuis une région de réception dans une région de décharge,
le dispositif de dosage comprenant une unité de prédosage avec laquelle la matière granulaire peut être transportée depuis un réservoir (3) sur le dispositif de transport ;
la matière granulaire pouvant être mise en rotation avec l'unité de prédosage et pouvant être déplacée dans la direction de l'axe de rotation du dispositif de transport ; et
l'unité de prédosage comprenant un disque (1) supporté à rotation,
**caractérisé en ce que** le disque (1) est disposé à l'extrémité d'une portion tubulaire (2) dont le diamètre intérieur augmente vers le disque (1), et un ou plusieurs dispositifs d'entraînement (4) étant disposés au niveau du côté du disque (1) tourné vers la portion tubulaire (2).

2. Dispositif de dosage selon la revendication 1, dans lequel le disque (1) comprend au moins une ouverture ou un évidement (5) par le biais de laquelle ou duquel la portion tubulaire (2) est connectée à une chambre de prédosage dans laquelle est disposé au moins un dispositif d'entraînement rotatif (10).

3. Dispositif de dosage selon la revendication 2, dans lequel la chambre de prédosage est limitée radialement par une paroi (6) qui présente une ouverture (7) par le biais de laquelle la chambre de prédosage est connectée à une chambre extérieure qui entoure la chambre de prédosage.

4. Dispositif de dosage selon l'une quelconque des revendications précédentes, dans lequel le dispositif de transport et le disque (1) de l'unité de pré dosage peuvent être entraînés par un entraînement commun.

5. Dispositif de dosage selon l'une quelconque des revendications précédentes, dans lequel le dispositif de transport et le disque (1) de l'unité de prédosage sont disposés coaxialement.

6. Dispositif de dosage selon l'une quelconque des revendications 1 à 5, dans lequel un élément perturbateur (9) sous forme de rehaussement est disposé au niveau d'une surface intérieure de la portion tubulaire (2).

7. Dispositif de dosage selon la revendication 6, dans lequel l'élément perturbateur (9) est réalisé sous forme de clavette.

8. Semoir comprenant un dispositif de dosage selon l'une quelconque des revendications précédentes.
